# NOUVEAU FASCICULE DE BREVET EUROPEEN

(11) **EP 1 852 293 B2**
(45) Date de publication et mention de la décision concernant l'opposition: **21.10.2015**
(45) Mention de la délivrance du brevet: 08.07.2009
(21) Numéro de dépôt: 07107382.9
(22) Date de dépôt: 02.05.2007
(51) Int. Cl.: B60J 11/00, B60R 5/04

(54) **Dispositif d'occultation pour véhicule à toiles solidarisables, et véhicule automobile correspondant**
Abdeckungsvorrichtung für Kraftfahrzeug mit zu einem Stück kombinierbaren Abdeckblenden und entsprechendes Kraftfahrzeug
Device for concealing an automobile, with solidly attachable canvas and corresponding vehicle

(30) Priorité: 02.05.2006 FR 0603910
(43) Date de publication de la demande: 07.11.2007
(73) Titulaire: Advanced Comfort Systems France SAS - ACS France, 79300 Bressuire (FR)
(72) Inventeur: Fourel, Pascal, 35400 Saint Malo (FR)
(74) Mandataire: Vidon Brevets & Stratégie

(56) Documents cités:
- EP-A- 1 609 653
- WO-A1-91/12155
- DE-B3-102004 018 351
- US-B1- 6 948 766
- US-B1- 6 948 766

## Description

### 1. Domaine de l'invention

Le domaine de l'invention est celui des équipements pour véhicules automobiles. Plus précisément, l'invention concerne l'occultation des surfaces d'un véhicule automobile. Elle concerne en particulier les cache-bagages, mais également les stores occultants des surfaces vitrées ou les ouvertures, comme les stores de toit, les stores de hayon et les stores de pare-brise, les coupe-vents, et tous les systèmes similaires pouvant mettre en oeuvre des toiles ou écrans amovibles.

### 2. Solutions de l'art antérieur

On connaît de nombreuses solutions de systèmes d'occultation pour les véhicules automobiles. Ces systèmes d'occultation sont souvent constitués de toiles d'occultation qui sont montées sur un tube enrouleur placé dans une cassette.

Dans certains cas, cette cassette peut être amovible. C'est souvent le cas, notamment, des cassettes de cache-bagages ou des cassettes de stores de pare-brise. Ces cassettes peuvent ainsi être stockées dans le véhicule (ou à l'extérieur de celui-ci) quand elles ne sont pas utilisées.

Un inconvénient de cette solution est que ces cassettes sont de dimensions importantes. En effet, les stores ou toiles d'occultation qu'elles comprennent présentent généralement une largeur proche de la largeur du véhicule, de façon à couvrir toute la surface du coffre, du pare-brise, ou du pavillon du véhicule. Il est donc difficile de trouver dans le véhicule un emplacement pratique de stockage de ces cassettes de grande longueur.

Des cassettes pliantes ont été envisagées pour répondre à ce problème. Ces cassettes contiennent deux tubes enrouleurs qui sont alignés, dans leur position d'utilisation, pour permettre de déployer deux toiles parallèlement. La cassette, une fois pliée, présente une longueur presque deux fois moins importante que si elle ne contenait qu'une seule toile couvrant la même surface.

Cependant, les deux toiles d'occultation présentent un aspect beaucoup moins satisfaisant que les toiles uniques, en utilisation. En effet, du fait de la disposition des tubes enrouleurs dans les deux parties de la cassette, de part et d'autre d'une charnière, les toiles d'occultation ne peuvent pas être jointives, et il existe donc entre les toiles une fente non occultée. Cet inconvénient est difficilement acceptable sur les véhicules, notamment sur des véhicules haut de gamme.

Par ailleurs, la jonction des différents éléments du store, comme par exemple des barres de tirage, peuvent présenter des difficultés techniques, et les solutions présentées actuellement ne sont pas réellement satisfaisantes pour l'utilisateur. Le document US 6 348 766 B1 décrit un dispositif d'occultation correspondant au préambule de la revendication 1.

### 3. Objectifs de l'invention

L'invention a notamment pour objectif de pallier ces inconvénients de l'art antérieur.

Plus précisément, un objectif de l'invention est de fournir une solution de système d'occultation comprenant plusieurs toiles dans une même cassette, et présentant un aspect proche de celui d'une toile unique.

Pour certains modes de réalisation particuliers, l'invention a également pour objectif de fournir une solution de cassette pliante pour de tels stores qui soit particulièrement fiable et facile à installer.

### 4. Exposé de l'invention

Ces objectifs, ainsi que d'autres qui apparaîtront par la suite, sont atteints à l'aide d'un dispositif d'occultation d'une surface d'un véhicule automobile selon la revendication 1.

Ainsi, les toiles sont enroulées sur les tubes enrouleurs de façon indépendantes, mais sont jointes dès qu'elles sont déployées. On conserve ainsi la qualité d'occultation d'une toile unique, tout en rendant possible de nombreuses applications, telles que le pliage de la cassette.

De façon avantageuse, lesdits moyens de solidarisation sont mis en oeuvre progressivement, au fur et à mesure du déploiement desdites toiles.

Selon un mode de réalisation préférentiel, le dispositif de l'invention comprend un élément assurant la jonction desdits moyens de solidarisation desdits bords, ledit élément de jonction étant situé à proximité du ou desdits tubes enrouleurs.

Avantageusement, lesdits moyens de solidarisation et ledit élément de jonction forment une fermeture à glissière. On peut noter que, selon l'approche de l'invention, l'élément de jonction reste immobile (par rapport à la cassette) et que ce sont les toiles qui se déplacent.

Bien sûr de nombreux autres moyens de solidarisation progressive connus peuvent être adaptés et mis en oeuvre.

Avantageusement, au moins une desdites toiles d'occultation est au moins partiellement déformable. En effet, lorsqu'elles sont enroulées, leurs bords ne sont pas en contact, alors qu'ils doivent l'être lorsque les toiles sont déployées.

Pour ceci, on peut prévoir qu'au moins une desdites toiles d'occultation comporte une portion élastique portant une partie desdits moyens de solidarisation.

Ladite cassette pliable comprend également avantageusement une poignée de transport.

Parmi les différentes applications de l'invention, on peut notamment citer :
- les cache-bagages ;
- les stores d'occultation de pavillon ;
- les stores d'occultation de lunette arrière ;
- les stores d'occultation de pare-brise ;
- les stores de protection extérieure de pare-brise;
- les dispositifs coupe-vent.

L'invention concerne également les véhicules automobiles comprenant au moins un dispositif d'occultation tel que décrit ci-dessus.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un dispositif d'occultation selon un mode de réalisation de l'invention, en cours de déploiement ;
- la figure 2 est une vue de détail des moyens de solidarisation du dispositif d'occultation de la figure 1 ;
- la figure 3 est une vue de détail des moyens de solidarisation selon un autre mode de réalisation de l'invention ;
- la figure 4 présente le dispositif d'occultation de la figure 1 dans une position partiellement pliée ;
- la figure 5 est une vue de détail du dispositif de la figure 4 ;
- la figure 6 est une vue partielle d'un dispositif d'occultation selon un autre mode de réalisation de l'invention ;
- la figure 7 est une autre vue partielle du dispositif d'occultation de la figure 6 ;
- la figure 8 est une vue partielle d'un dispositif d'occultation selon encore un autre mode de réalisation de l'invention, présentant une poignée, en position partiellement pliée ;
- la figure 9 est une autre vue partielle du dispositif d'occultation de la figure 8, en position d'utilisation ;
- les figures 10, 11 et 12 représentent partiellement les moyens de verrouillage en position d'utilisation d'une cassette pliable selon trois autres modes de réalisation de l'invention ;
- les figures 13 et 14 sont deux vues partielles des moyens de verrouillage en position d'utilisation d'un dispositif d'occultation selon encore un autre mode de réalisation de l'invention, en position d'utilisation et en position en cours de pliage, respectivement ;
- la figure 15 est une vue partielle d'une poignée d'un dispositif d'occultation selon encore un autre mode de réalisation de l'invention, en position partiellement pliée ;
- la figure 16 est une autre vue partielle du dispositif d'occultation de la figure 15, en position d'utilisation.

### 6. Description détaillée de l'invention

### 6.1 Rappel du principe de l'invention

Le principe général de l'invention repose sur des moyens de solidarisation réversible, par exemple de type fermeture à glissière, permettant de joindre deux bords voisins de toiles d'occultation au fur et à mesure de leur déploiement. Ces toiles peuvent donc être reliées, ou solidarisées l'une à l'autre, sur leurs parties déployées alors que leurs parties enroulées ne le sont pas.

Selon un mode de réalisation préférentiel, mais non exclusif, de l'invention, ces moyens de solidarisation sont associés à une cassette pliable.

### 6.2 Jonction des toiles

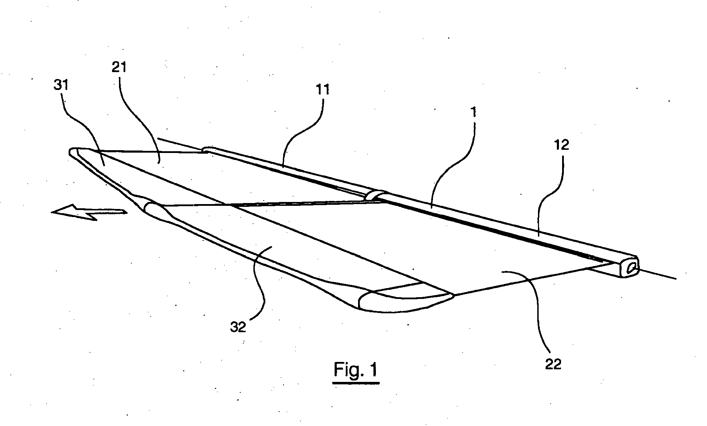

Les figures 1 à 4 illustrent un système d'occultation selon un mode de réalisation de l'invention. La figure 1 présente ce système dans une position d'utilisation. Ce système d'occultation comprend une cassette 1 composée de deux demi-cassettes 11 et 12 articulées l'une par rapport à l'autre. Chacune de ces demi-cassettes, respectivement 11 et 12, comprend un tube enrouleur, sur lequel est montée une toile d'occultation, respectivement 21 et 22. Des barres de tirage, respectivement 31 et 32, sont solidaires de l'extrémité de chacune des toiles 21 et 22.

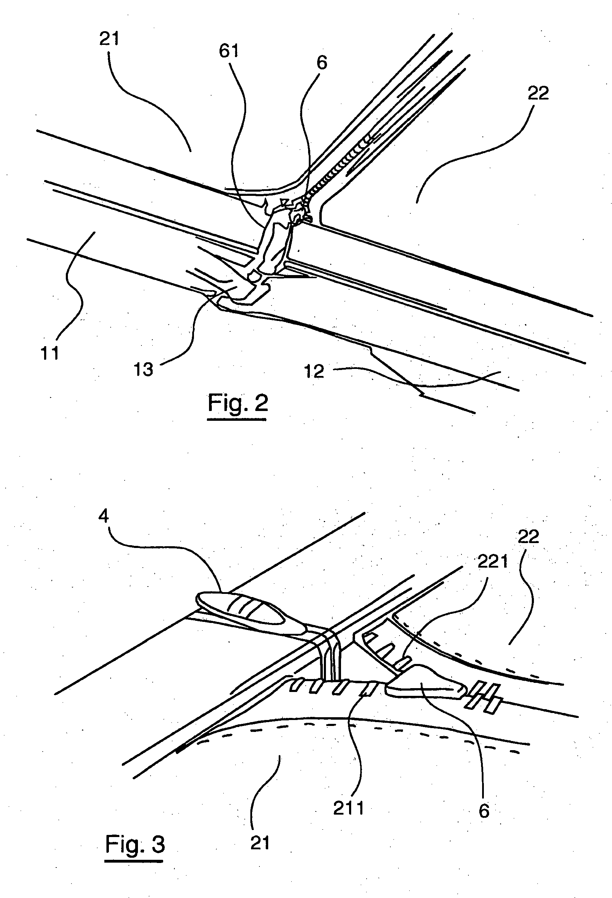

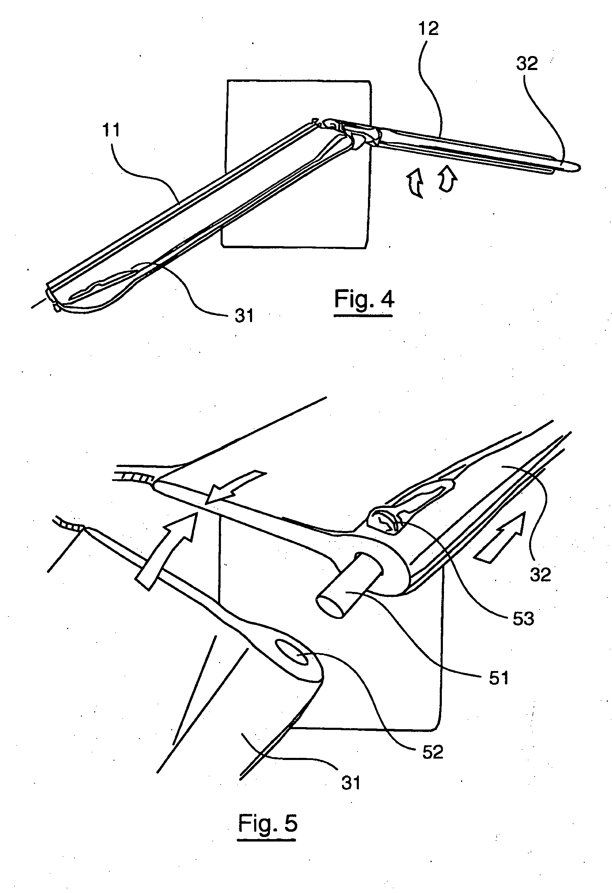

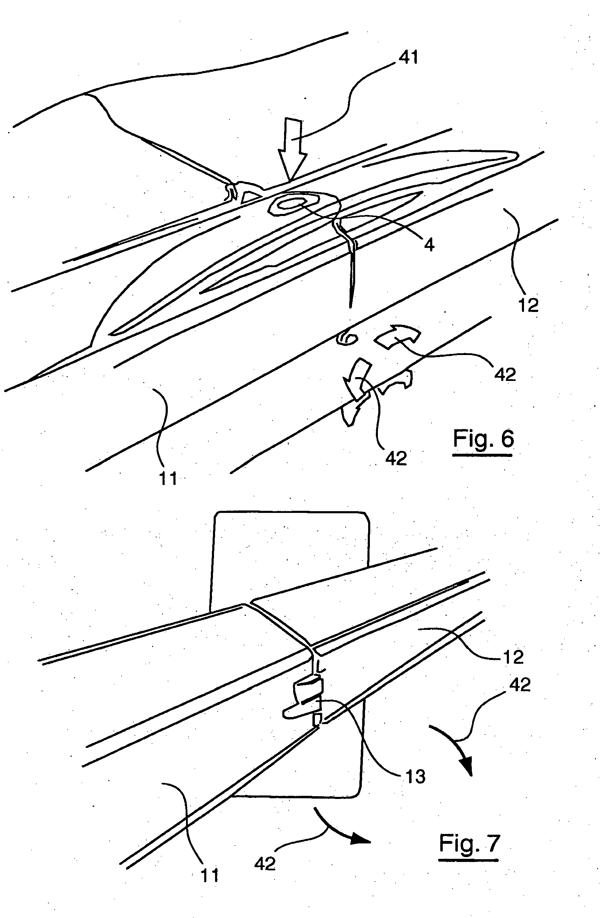

La cassette 1 est ainsi une cassette pliable, qui peut donc être entreposée beaucoup plus facilement qu'une cassette en une seule partie. Les deux demi-cassettes peuvent pivoter l'une par rapport à l'autre grâce à une charnière 13, représentée sur la figure 2. La figure 7 montre un autre mode de réalisation de cette charnière 13. La figure 4 représente les demi-cassettes 11 et 12 partiellement repliées.

Dans la position d'utilisation du dispositif, les tubes enrouleurs sont alignés, et les barres de tirage 31 et 32 sont jointes par leur extrémité. Dans certains cas, les deux tubes peuvent ne pas être complètement alignés, par exemple lorsqu'un effet de galbe est souhaité.

La figure 5 présente un exemple de mécanisme de jonction des extrémités des deux barres de tirage. Ce mécanisme comprend un doigt 51 monté mobile sur la barre de tirage 32, pouvant pénétrer dans un logement 52 dans la barre de tirage 31. Le mouvement du doigt est contrôlé par une commande 53 sur la barre de tirage 32.

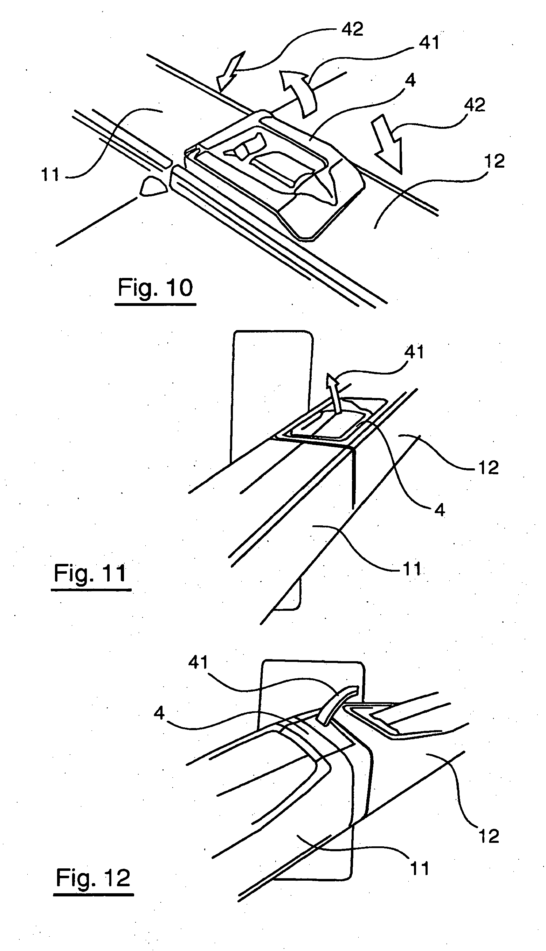

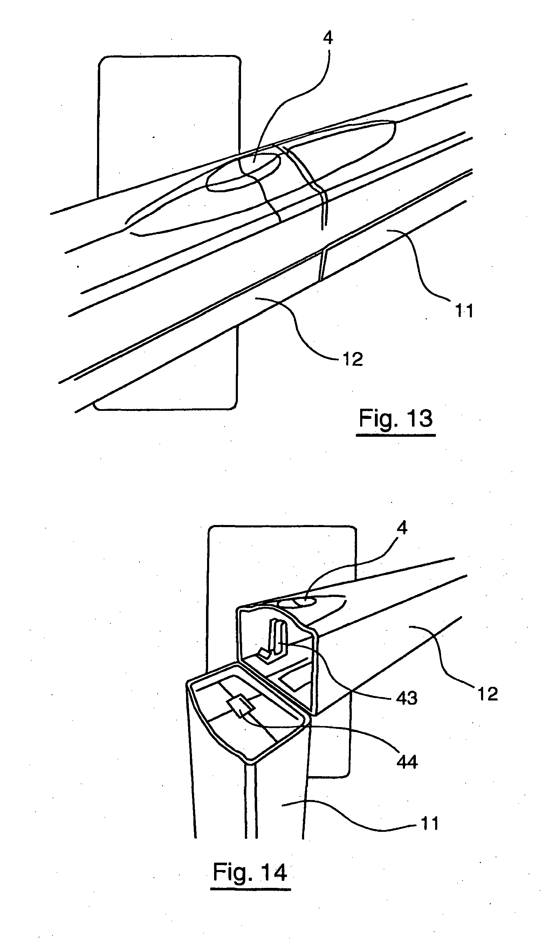

Dans la position d'utilisation du dispositif, les deux demi-cassettes sont verrouillées l'une à l'autre par leur extrémité. Une commande de déverrouillage 4 permet de déverrouiller ces deux demi-cassettes 11 et 12. Les figures 6, 8, 9, 10, 11, 12, 13 et 14 montrent des exemples de modes de réalisation de cette commande de déverrouillage 4, sur laquelle on peut agir dans le sens indiqué par la flèche 41 pour faire pivoter les demi-cassettes 11 et 12 dans le sens indiqué par les flèches 42. La figure 14 permet également de voir un exemple de mécanisme de verrouillage composé d'un crochet solidaire d'une des demi-cassettes et pouvant pénétrer dans une lumière 44 de l'autre demi-cassette.

Lorsque le dispositif est en position d'utilisation, il est possible de tirer sur les barres de tirage pour déployer les toiles 21 et 22. Ces deux toiles d'occultation se déploient alors parallèlement. Pour éviter qu'un jour apparaisse entre les bords des deux toiles d'occultation 21 et 22, au niveau du milieu de la cassette, un mécanisme de jonction des toiles est prévu.

Ce mécanisme de jonction comprend des moyens de solidarisation 211 et 221 complémentaires montés sur le bord de chacune des toiles 21 et 22. Un élément de jonction 6 est prévu pour solidariser entre eux, de façon réversible, les éléments de solidarisation 211 et 221.

Selon un mode de réalisation préférentiel, les moyens de solidarisation 211 et 221 et l'élément de jonction 6 forment une fermeture à glissière, telle que les fermetures connues sous la marque déposée « fermeture éclair ». Ils peuvent également former une fermeture semblable à celles utilisées pour la fermeture de sachets plastiques, et connues notamment sous la marque déposée « minigrip ». Bien entendu, les moyens de solidarisation 211 et 221 et l'élément de jonction 6 peuvent également former tout autre moyen de fermeture du même type ou ayant les mêmes effets de solidarisation et de désolidarisation progressives, lors du déploiement ou du repli respectivement.

Contrairement aux modes d'utilisation habituels de telles fermetures dans lesquels l'élément de jonction est mobile le long des moyens de solidarisation complémentaires qui sont essentiellement immobiles, l'élément de jonction 6 est ici relié de façon rigide à la cassette 1 (ou à tout le moins non déplaçable le long des toiles dépliées) par exemple par l'intermédiaire d'une patte de fixation 61.

Les toiles 21 et 22, elles, sont mobiles lors de leur déploiement. Au fur et à mesure de leur déploiement, l'élément de jonction 6 rassemble les moyens de solidarisation 211 et 221 fixés aux bords des toiles 21 et 22 et les solidarise. Seules les parties déployées des toiles 21 et 22 sont donc solidarisées, les parties de ces toiles étant enroulées sur les tubes enrouleurs restant indépendantes l'une de l'autre.

Avant le déploiement des toiles du store, il est nécessaire d'amorcer la solidarisation, par exemple en amenant les extrémités proches des barres de tirage des moyens de solidarisation 211 et 221 dans l'élément de jonction 6.

Les barres de tirage comprennent également avantageusement des moyens de liaison, qui peuvent assurer la solidarisation lorsque la cassette est dépliée.

Pour que les bords des toiles d'occultation 21 et 22 puissent être jointifs, cette toile est avantageusement au moins partiellement élastique. Selon un mode de réalisation préférentiel, une bande de toile élastique est cousue sur le bord des toiles d'occultation 21 et 22 et portent les moyens de solidarisation 211 et 221. Les bords des toiles peuvent ainsi se déformer pour se rapprocher l'un de l'autre.

### 6.5 Autres caractéristiques et avantages

Les modes de réalisation de l'invention décrits ci-dessus présentent le cas de cassettes de stores à enrouleurs pliables. Cependant l'invention peut également s'appliquer à tout autre cas de toiles d'occultation montées sur un ou plusieurs tubes enrouleurs, qui peuvent être alignés, décalés, ou former un angle entre eux, et dans lesquels il est utile de solidariser par leurs bords les toiles d'occultation. Plus de deux toiles peuvent ainsi être solidarisées les unes aux autres simultanément.

Dans un mode de réalisation particulier de l'invention, plusieurs tubes enrouleurs sont montés dans une cassette, qui peut être pliable, sur des axes parallèles, mais distincts. Cette disposition permet que les tubes soient légèrement décalés l'un par rapport à l'autre, et que les toiles d'occultation se déploient en se chevauchant légèrement, par exemple sur une largeur d'un centimètre. La solidarisation entre les toiles peut alors se faire par une fixation du type de celles distribuées sous la marque déposé « Velcro ». Dans un tel cas, il peut être possible de se passer d'un élément de jonction.

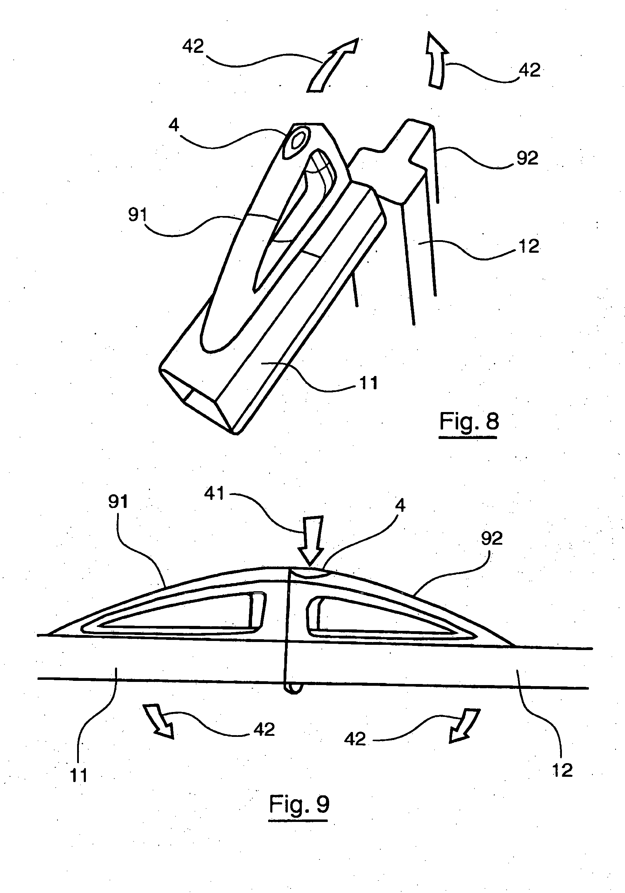

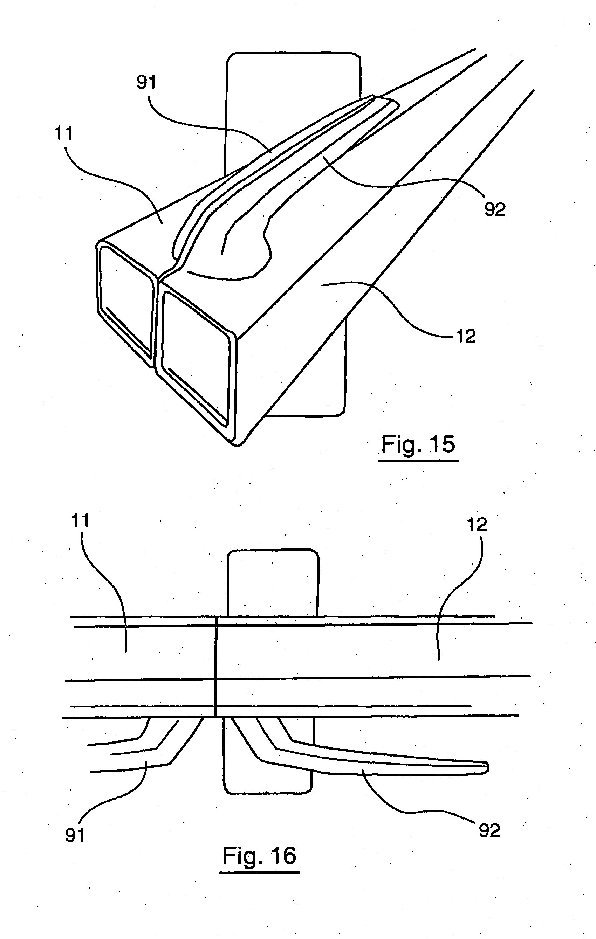

Selon un mode de réalisation facultatif de l'invention, illustré par les figures 8, 9, 15 et 16, les demi-cassettes 11 et 12 peuvent être munies de poignées respectivement 91 et 92 (formant une seule poignée lorsque la cassette est pliée, (cf. figures 15 et 16)) permettant de faciliter le transport et l'installation du dispositif d'occultation.

## Revendications

1. Dispositif d'occultation d'une surface d'un véhicule automobile, comprenant au moins deux toiles d'occultation (21, 22) montées chacune sur un tube enrouleur (11, 12) distinct, et se déployant suivant des directions sensiblement parallèles, une barre de tirage (31, 32) étant solidaire de l'extremité de chacune desdites toiles d'occultation (21, 22) lesdites toiles d'occulation (21, 22) comprenant des moyens de solidarisation (211, 221) réversible permettant de joindre entre eux deux bords voisins des parties déployées d'au moins deux desdites toiles (21, 22), lesdites toiles (21, 22) n'étant pas jointes sur leur partie enroulée, au moins une desdites toiles d'occultation (21, 22) comportant une portion élastique portant une partie desdits moyens de solidarisation (211, 221) lesdits tubes enrouleurs (11, 12) pouvant prendre au moins deux positions :
- une première position dans laquelle lesdits tubes enrouleurs (11, 12) sont situés sensiblement sur un même axe ; et
- au moins une deuxième position dans laquelle les axes desdits tubes enrouleurs (11, 12) forment entre eux un angle non nul,
**caractérise en ce que** lesdits tubes enrouleurs (11, 12) sont montés dans une cassette pliable (1) comprenant des moyens de verrouillage dans ledite première position desdits tubes enrouleurs (11, 12),
et **en ce que** lesdites barres de tirage (31, 32) comprennent des moyens de liaison dans ladited première position desdits tubes enrouleurs (11, 12).

2. Dispositif d'occultation selon la revendication 1 **caractérisé en ce que** lesdits moyens de solidarisation (211, 221) sont mis en oeuvre progressivement, au fur et à mesure du déploiement desdites toiles (21, 22).

3. Dispositif d'occultation selon l'une quelconque des revendications 1 et 2, **caractérisé en ce qu'**il comprend un élément assurant la jonction desdits moyens de solidarisation (211, 221) desdits bords, ledit élément de jonction (6) étant situé à proximité du ou desdits tubes enrouleurs (11, 12).

4. Dispositif d'occultation selon l'une quelconque des revendications 1 à 3, **caractérisé en ce que** lesdits moyens de solidarisation (211, 221) et ledit élément de jonction (6) forment une fermeture à glissière.

5. Dispositif d'occultation selon l'une quelconque des revendications 1 à 4, **caractérisé en ce qu'**au moins une desdites toiles d'occultation (21, 22) est au moins partiellement déformable.

6. Dispositif d'occultation selon l'une quelconque des revendications 1 à 5, **caractérisé en ce que** ladite cassette comprend une poignée de transport (91, 92).

7. Dispositif d'occultation selon l'une quelconque des revendications 1 à 6, **caractérisé en ce qu'**il appartient au groupe comprenant :
- les cache-bagages ;
- les stores d'occultation de pavillon ;
- les stores d'occultation de lunette arrière ;
- les stores d'occultation de pare-brise ;
- les stores de protection extérieure de pare-brise ;
- les dispositifs coupe-vent.

8. Véhicule automobile **caractérisé en ce qu'**il comprend au moins un dispositif d'occultation selon l'une quelconque des revendications 1 à 7.

## Patentansprüche

1. Vorrichtung zum Verdecken einer Fläche eines Kraftfahrzeuges, die mindestens zwei Abdeckbahnen (21, 22) aufweist, von der jede auf einer verschiedenen Aufrollwalze (11, 12) aufgebracht ist und entlang etwa parallelen Richtungen entfaltet werden, wobei eine Zugstange (31, 32) mit dem Ende einer jeden der besagten Abdeckbahnen (21, 22) verbunden ist, wobei die besagten Abdeckbahnen (21, 22) umkehrbare Verbindungsmittel (211, 221) aufweisen, die eine Verbindung zweier benachbarter Ränder der entfalteten Teile von mindestens zwei der besagten Abdeckbahnen (21, 22) ermöglichen, wobei die besagten Abdeckbahnen (21, 22) an ihrem jeweils aufgerollten Teil nicht verbunden sind und wobei mindestens eine der besagten Abdeckbahnen (21, 22) einen elastischen Teil aufweist, der einen Teil der besagten Verbindungsmittel (211, 221) trägt, wobei die besagten Aufrollwalzen (11, 12) mindestens zwei Stellungen einnehmen können:
- eine erste Stellung, bei der die besagten Aufrollwalzen (11, 12) in etwa auf derselben Achse liegen und,
- mindestens eine zweite Stellung, bei der die Achsen der besagten Aufrollwalzen (11, 12) untereinander einen Winkel bilden, der nicht null ist,
**dadurch gekennzeichnet, dass** die Aufrollwalzen (11, 12) in einer faltbaren Kassette (1) eingebaut sind, welche über Mittel zum Verriegeln in der besagten ersten Stellung derAufrollwalzen (11, 12) verfügt und,
dass die besagten Zugstangen (31, 32) in der besagten ersten Stellung über Verbindungsmittel der besagten Aufrollwalzen (11, 12) verfügen.

2. Vorrichtung zum Verdecken nach Anspruch 1, **dadurch gekennzeichnet, dass** die besagten Verbindungsmittel (211, 221) nach und nach im Laufe der Entfaltung der besagten Abdeckbahnen (21, 22) zum Einsatz kommen.

3. Vorrichtung zum Verdecken nach einem der Ansprüche 1 und 2, **dadurch gekennzeichnet, dass** sie ein Element aufweist, welches das Zusammenfügen der besagten Verbindungsmittel (211, 221) der besagten Ränder sicherstellt, wobei das besagte Element zum Zusammenfügen (6) in der Nähe der besagten Aufrollwalze(n) (11, 12) angebracht wird.

4. Vorrichtung zum Verdecken nach einem der Ansprüche 1 bis 3, **dadurch gekennzeichnet, dass** die besagten Verbindungsmittel (211, 221) und das besagte Element zum Zusammenfügen (6) einen Gleitverschluss bilden.

5. Vorrichtung zum Verdecken nach einem der Ansprüche 1 bis 4, **dadurch gekennzeichnet, dass** mindestens eine der besagten Abdeckbahnen (21, 22) sich mindestens teilweise verformen lässt.

6. Vorrichtung zum Verdecken nach einem der Ansprüche 1 bis 5, **dadurch gekennzeichnet, dass** die besagte Kassette einen Tragegriff (9) aufweist.

7. Vorrichtung zum Verdecken nach einem der Ansprüche 1 bis 6, **dadurch gekennzeichnet, dass** sie zu der Gruppe gehört, die folgendes umfasst:
- Gepäckverdecke;
- Abdeckrollos für das innere Fahrzeugdach;
- Abdeckrollos für das Heckfenster;
- Abdeckrollos für die Windschutzscheibe;
- äußere Schutzrollos für die Windschutzscheibe;
- Windabschirmvorrichtungen.

8. Kraftfahrzeug, **dadurch gekennzeichnet, dass** es mindestens eine Vorrichtung zum Verdecken nach einem der Ansprüche 1 bis 7 aufweist.

## Claims

1. Device for covering a surface of a motor vehicle, which has at least two shading webs (21, 22) which are each mounted on a different winding shaft (11, 12) and which can be unfolded in approximately parallel directions, a pull bar (31, 32) being fixedly attached to the end of each of the said shading webs (21, 22), the said shading webs (21, 22) comprising means (211, 221) which make possible a connection, which can be reversed, and by means of which two adjacent edges of the unfolded parts of at least two of the said webs (21, 22) can be connected to each other, wherein the said webs (21, 22) are not connected at their rolled parts, at least one of the said shading webs (21, 22) comprising an elastic part which bears a part of the said connecting means (211, 221), the said winding shafts (11, 12) being able to take at least two positions:
- a first position, in which the said winding shafts (11, 12) are arranged on approximately the same axis; and
- at least a second position, in which the axes of the said winding shafts (11, 12) form an angle between them which is not zero,
**characterised in that** the said winding shafts (11, 12) are attached to a foldable housing (1) which has means for locking in the first position of the said winding shafts (11, 12), and **in that** the said pull bars (31, 32) have means for linking in the said first position the said winding shafts (11, 12).

2. Device for covering according to Claim 1, **characterised in that** the said connecting means (211, 221) are used gradually in the course of the unfolding of the said webs (21, 22).

3. Device for covering according to one of Claims 1 or 2, **characterised in that** it has an element which ensures that the said connecting means (211, 221) of the said edges are joined together, wherein the said element (6) for joining together is located in the vicinity of the said winding tube(s) (11, 12).

4. Device for covering according to one of Claims 1 to 3, **characterised in that** the said connecting means (211, 221) and the said element (6) for joining together form a sliding engagement.

5. Device for covering according to one of Claims 1 to 4, **characterised in that** at least one of the said shading webs (21, 22) can be at least partially deformed.

6. Device for covering according to one of Claims 1 to 5, **characterised in that** the said housing has a transporting handle (91, 92).

7. Device for covering according to one of Claims 1 to 6, **characterised in that** it belongs to one of the following groups:
- luggage covering;
- roller blind for the vehicle roof;
- roller blind for the rear window;
- roller blind for the windscreen;
- outer protective roller blind for the windscreen;
- windstop devices.

8. Motor vehicle which is **characterised in that** it has at least one device for covering according to one of Claims 1 to 7.
